# EUROPEAN PATENT APPLICATION

(11) **EP 3 677 150 A1**
(43) Date of publication of application: **08.07.2020**
(21) Application number: 18857617.7
(22) Date of filing: 28.02.2018
(51) Int. Cl.: A47C 27/06, A47C 27/00

(54) **ARCUATE POCKETED SPRING**

(30) Priority: 22.09.2017 CN 201710886675
(71) Applicant: Guangzhou Lianrou Machinery and Equipment Co., Ltd., Luogang District Guangzhou Guangdong 510530 (CN)
(72) Inventor: TAN, Zhiming, Guangzhou, Guangdong 510530 (CN)
(74) Representative: Kaya, Erdem
(86) International application number: PCT/CN2018/077470
(87) International publication number: WO 2019/056703

(57) **Abstract**

Disclosed is an arcuate pocketed spring (1), comprising a plurality of individual springs (12) connected at intervals, wherein the individual springs (12) are packaged in an arcuate manner in a cloth-like material (13). Compared with traditional pocketed springs, the arcuate pocketed spring has better flexibility. In addition to better flexibility, a pocketed spring mattress formed by combining the pocketed springs (1) of such a structure has more space inside for filling with other functional materials.

## Description

### TECHNICAL FIELD

The present invention relates to the technical field of pocketed springs and pocketed spring mattresses, in particular to an arcuate pocketed spring.

### BACKGROUND

Pocketed springs are formed by independently packaging individual springs packaged in cloth and are one of the main materials for manufacturing pocketed spring mattresses. In general, multiple individual springs form a continuous pocketed spring in an upright manner, and multiple pocketed springs are bonded together side by side to integrally form a pocketed spring mattress. The pocketed spring mattress of such a structure has good support performance and is comfortable, but cannot fulfill other functions.

### SUMMARY

The technical issue to be settled by the present invention is to provide a pocketed spring of a novel structure. A spring mattress formed by such pocketed springs is softer and has more space inside for adding other functional materials or functional modules under the premise that the support performance and comfort are not affected.

The technical solution adopted by the present invention to settle the above technical issue is as follows: an arcuate pocketed spring comprises a plurality of individual springs connected at intervals, and the individual springs are packaged in an arcuate manner in a cloth-like material.

Furthermore, at least one pair of the arcuate individual springs are packaged in the cloth-like material in a manner that concave surfaces of the at least one pair of the of arcuate individual springs are opposed in a "()" shape or in a manner that middle convex surfaces of the at least one pair of the of arcuate individual springs are opposed in a ")("shape.

Furthermore, each arcuate individual spring is independently separated along a curved joint on the profile of the individual spring.

Furthermore, each arcuate individual spring is independently separated along a multi-section linear joint on the profile of the individual spring.

Furthermore, the individual springs in the arcuate pocketed spring are common cylindrical or drum-type springs in a free state.

Furthermore, a part of the individual springs in the arcuate pocketed spring are packaged in an arcuate manner in the cloth-like material, and another part of the individual springs in the arcuate pocketed spring are packaged in an upright manner in the cloth-like material.

Furthermore, concave surfaces of the arcuate individual springs are opposed and arranged in a "()" shape to form middle cavities, capable of being filled with various fillers. Furthermore, the cloth-like material is a non-woven fabric, a semi-breathable chemical fabric, a non-breathable chemical fabric or a flexible film.

The present invention has the following beneficial effects: the technical issue to be settled by the present invention is to provide a pocketed spring of a novel structure; compared with traditional pocketed springs, the pocketed spring has better flexibility; and in addition to better flexibility, a pocketed spring mattress formed by combining the pocketed springs of such a structure has more space inside for filling with other functional materials (such as desiccants, repellents, and anti-corrosive materials) or functional modules (such as airbags, pipes, and other small mechanical structures).

### BRIEF DESCRIPTION OF DRAWINGS

The present invention is further described below in combination with the accompanying drawings and embodiments.
FIG. 1 is a structural view of an arcuate pocketed spring of the present invention;
FIG. 2 is a perspective view of FIG. 1;
FIG. 3 is another structural view of the arcuate pocketed spring of the present invention;
FIG. 4 is an external view of the arcuate pocketed spring having individual springs inside being cylindrical springs in the free state of the present invention;
FIG. 5 is an external view of the arcuate pocketed spring having the individual springs inside being drum-type springs in the free state of the present invention; and
FIG. 6 is a structural view of a mattress formed by the arcuate pocketed springs of the present invention.

### DETAILED DESCRIPTION OF EMBODIMENTS

The present invention is further detailed below with reference to the accompanying drawings.

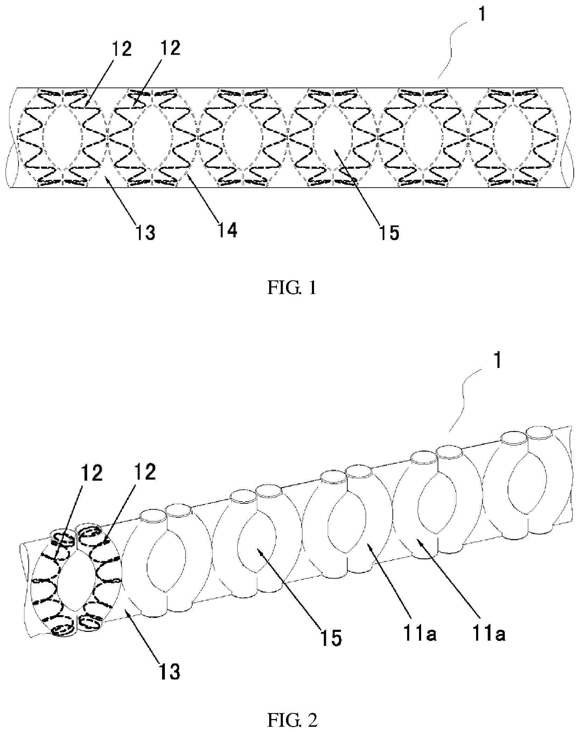

Referring to FIG. 1 and FIG. 2, an arcuate pocketed spring 1 comprises a plurality of individual springs 12 connected at intervals, and the individual springs are packaged in an arcuate manner in a cloth-like material 13 .

In the embodiment, the individual springs 12 in the arcuate pocketed spring 1 are sequentially packaged in the cloth-like material 13 in a "()" shape. Each arcuate individual spring 12 is independently separated along a curved joint 14 on the profile of the individual spring to form an individual arcuate pocketed spring 11a.

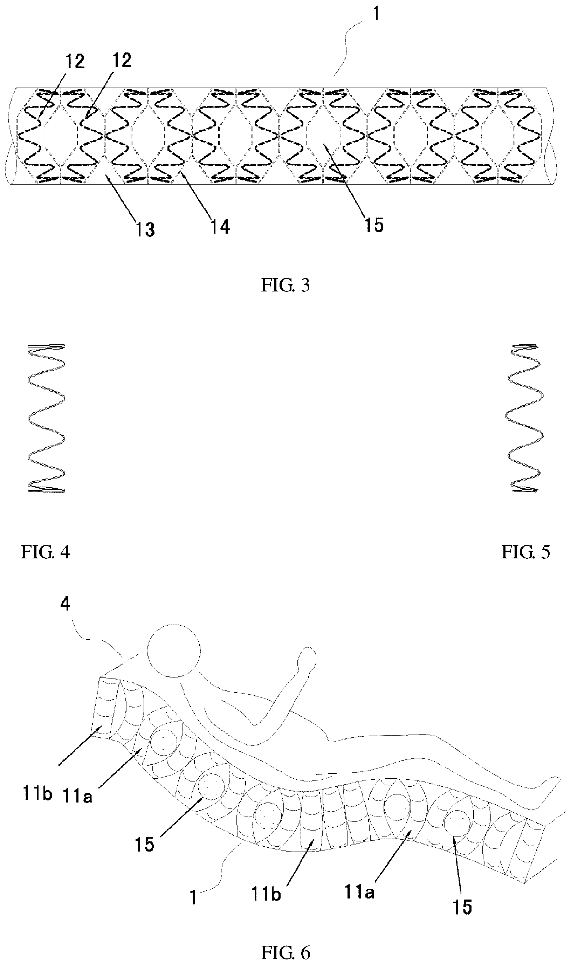

Referring to FIG. 3 which shows another separation joint, each arcuate individual spring 12 is independently separated along a multi-section linear joint 14 on the profile of the individual spring.

As shown in FIG. 4 and FIG. 5, after being taken out of the cloth-like material 13, the individual springs 12 in the individual arcuate pocketed springs 11a are cylindrical springs shown in FIG. 4 or drum-type springs shown in FIG. 5 in a free state.

In a further embodiment, as shown in FIG. 6, a mattress 4 is formed by the arcuate pocketed springs 1, wherein each arcuate pocketed spring 1 comprises individual arcuate pocketed springs 11a, and individual common pocketed springs 11b formed by packaging individual springs 12 in a common upright manner in a cloth-like material. Concave surfaces of every two individual arcuate pocketed springs 11a are arranged in a "()" shape to form a middle cavity 15, which could be filled with various fillers.

In this embodiment, the cloth-like material 13 is preferably a non-woven fabric. In other embodiments, the cloth-like material 13 could be a semi-breathable chemical fabric, a non-breathable fabric, a flexible film, or the like.

The embodiments of the present invention are detailed above with reference to the accompanying drawings, but the present invention is not limited to the above-mentioned embodiments. Various transformations can be made by those skilled in the art within their knowledge scope without deviating from the spirit of the present invention.

## Claims

1. An arcuate pocketed spring, comprising a plurality of individual springs connected at intervals, wherein the individual springs are packaged in an arcuate shape in a cloth-like material.

2. The arcuate pocketed spring of Claim 1, wherein at least one pair of the arcuate individual springs are packaged in the cloth-like material in a manner that concave surfaces of the at least one pair of the arcuate individual springs are opposed in a "()" shape or in a manner that middle convex surfaces of the at least one pair of the arcuate individual springs are opposed in a ") ("shape.

3. The arcuate pocketed spring of Claim 1, wherein each of the arcuate individual springs is independently separated along a curved joint on a profile of the individual spring to form an individual arcuate pocketed spring.

4. The arcuate pocketed spring of Claim 1, wherein each of the arcuate individual springs is independently separated along a multi-section linear joint on a profile of the individual spring to form an individual arcuate pocketed spring.

5. The arcuate pocketed spring of Claim 1, wherein the individual springs in the arcuate pocketed spring are cylindrical or drum-type springs in a free state.

6. The arcuate pocketed spring of Claim 1, wherein a part of the individual springs are packaged in an arcuate manner in the cloth-like material, and another part of the individual springs are packaged in an upright manner in the cloth-like material.

7. The arcuate pocketed spring of Claim 1 or 2, wherein concave surfaces of the arcuate individual springs are opposed and arranged in a "()" shape to form middle cavities capable of being filled with various fillers.

8. The arcuate pocketed spring of Claim 1, wherein the cloth-like material is a non-woven fabric, a semi-breathable chemical fabric, a non-breathable chemical fabric, or a flexible film.
